# EUROPEAN PATENT SPECIFICATION

(11) **EP 4 055 085 B1**
(45) Date of publication and mention of the grant of the patent: **21.01.2026**
(21) Application number: 20793009.0
(22) Date of filing: 26.10.2020
(51) Int. Cl.: C08G 77/12, C08G 77/18, C08G 77/20, C08L 83/04, C09J 183/04

(54) **HIGH TEMPERATURE RESISTANT DUAL COMPONENT SILICONE ADHESIVE**
HOCHTEMPERATURBESTÄNDIGER ZWEIKOMPONENTIGER SILIKONKLEBSTOFF
ADHÉSIF EN SILICONE À DEUX COMPOSANTS RÉSISTANT AUX TEMPÉRATURES ÉLEVÉES

(30) Priority: 08.11.2019 EP 19207938
(43) Date of publication of application: 14.09.2022
(73) Proprietor: Henkel AG & Co. KGaA, 40589 Düsseldorf (DE)
(72) Inventor: GRAUSO, Antonio, 20022 Castano Primo (MI) (IT); SALMOIRAGHI, Eleonora, 20018 Sedriano (MI) (IT); RADAELLI, Andrea, 20085 Milano (IT); SARCINA, Fabio, 20125 Milano (IT)
(86) International application number: PCT/EP2020/080018
(87) International publication number: WO 2021/089354

(56) References cited:
- WO-A1-2018/197072
- WO-A1-99/43753
- US-A1- 2004 147 702
- US-A1- 2005 020 738

## Description

The present invention relates to two-component (2K) silicone-based adhesive compositions comprising at least one epoxy silane and a titanium alkoxide, as described herein, for improving the adhesive properties of silicone-based adhesive compositions, in particular under high temperature conditions.

The silicone-based polyaddition curing system is well known to have several advantages, such as good mechanical properties, good thermal and chemical resistance, low shrinkage, and is used in several fields of application (food, dental, molding). However, to date, such systems suffer from overall poor adhesion.

High temperature sealants and adhesives are valuable industrial materials. There is a continuing search for materials that are useful at ever increasing temperatures, such as greater than 200 °C, and that will maintain desired performances at high temperatures. In the appliance industry, customers have more and more high temperature requirements in their applications and this leads to continuously tweaking the sealing and adhesive products available for such applications. For example, there is a high demand for cooktop bonding and/or oven bonding where silicone is typically the only viable sealant that will survive during high temperature applications.

Prior attempts at solving this problem include 1-component acetoxy silicone. The main disadvantage in the usage of this type of adhesive is the corrosion associated with the metal substrates and the long handling time that increases a processing time at a customer site.

Another technology adopted by those skilled in the art pertains to 1-component and 2-component oxime silicone. However, this sealant generates dangerous oxime by-products, but customers desire products that generate little to no by-products after curing of the sealant.

Typical 2-component silicones contain fillers (e.g. calcium carbonate, trihydrate alumina, etc.) that may cause the embrittlement of the product upon exposure to temperatures over 200 °C. Such silicones may be based on polycondensation technology, so their curing process may generate by-products during the polymerization that may then lead to bubbles in the sealing area when the product is exposed to temperatures over 200 °C. The bubbles may contribute to increased failure of the sealing.

In the international patent publication WO 2017/007560, entitled HIGH TEMPERATURE RESTISTANT, TWO COMPONENT, LOW VISCOSITY SILICONE COMPOSITION, a 2-component oxime-based silicone for high temperature resistance is described. A special filler combination was introduced to solve the embrittlement issue, but the issue pertaining to by-products still remained.

The ideal silicone adhesive composition would be a dual component (2-component) addition silicone having improved temperature stability, high adhesion properties, and have minimal by-products.

Patent WO 99/43753 describes a two-component silicone-based adhesive composition used for bonding various substrates such as metal or plastics, and in particular for bonding two substrates together comprising a first component comprising an organopolysiloxane comprising alkenyl groups, an organohydrogenpolysiloxane comprising Si-H groups, an inhibitor, silica, vinyltrimethoxysilane and an epoxy silane (GLYMO). The second component comprises an organopolysiloxane comprising alkenyl groups, silica, a platinium compound as hydrosilylation catalyst and butyl titanate. Alternatively, the first part may comprise an organopolysiloxane comprising alkenyl group and an organopolysiloxane comprising SiH group and the second part may comprise an organopolysiloxane comprising vinyl groups, a platinium-based hydrosilylation catalyst, a vinylsilane, an alkoxysilane epoxy and a titanate compound.

Patent US 2005/020738 relates to a cross-linkable two-part form adhesive silicone composition used as adhesive for bonding various substrates, wherein the first part comprises an organopolysiloxane comprising alkenyl groups, silica, tetrabutyl titanate and a platinium compound as hydrosilylation catalyst and the second part comprises an organopolysiloxane comprising alkenyl groups, silica, an organohydrogenpolysiloxane comprising Si-H groups, vinyltrimethoxysilane and an epoxy silane (GLYMO).

Patent US 2004/147702 describes a silicone gel composition characterised by high long-term stability at elevated temperatures after curing being prepared under a two-component form wherein the first part comprises at least one organopolysiloxane comprising alkenyl groups, silica, tetrabutyl titanate and a platinium compound as hydrosilylation catalyst and wherein the second part comprises an organopolysiloxane comprising alkenyl groups, silica, an organohydrogenpolysiloxane comprising Si-H groups, an alkoxysilane.

Finally, patent WO 2018/197072 relates to an adhesion promoter system for use in two-component silicone formulations suitable as adhesives for bonding various surfaces wherein the first part comprises at least one organopolysiloxane comprising alkenyl groups, silica, an organohydrogenpolysiloxane comprising Si-H groups and a pre-polymer and the second part comprises an organopolysiloxane comprising alkenyl groups, silica and an organohydrogenpolysiloxane comprising Si-H groups. The pre-polymer is prepared by reacting an organopolysiloxane comprising terminal SiH group with an allylalkoxysilane in presence of an hydrosilylation catalyst.

The object of the present invention was therefore the provision of a silicone-based polyaddition curing system having improved adhesion properties on various surfaces, including metal and plastic surfaces where the surface temperature may be greater than 200 °C. Achieving good retention and stable mechanical properties after long-term exposure to temperatures between 200 °C and 300 °C would be ideal.

These objects have been achieved by the compositions of the invention, as described in the following.

In a first aspect, the present invention relates to a two-component silicone-based adhesive composition comprising
a first component (A) comprising
   at least one vinyl-terminated polysiloxane polymer and
   at least one hydrosilyl group-containing crosslinker, and
a second component (B) comprising
   at least one -Si(OR^{a})₃ terminated polyorganosiloxane prepolymer,
   a hydrosilylation catalyst,
   at least one epoxy silane in an amount of from 0.3% to 1.2% by weight, preferably 0.5% to0.9% by weight, based on the total weight of the component (B), and
   at least one vinyl-terminated polysiloxane polymer
wherein OR^{a} is a hydrolysable group and the -Si(OR^{a})₃ terminated polyorganosiloxane prepolymer is obtainable by reacting a hydrogen-terminated polyorganosiloxane with a vinyl group and -Si(OR^{a})₃ group containing silane in the presence of a catalyst, wherein the hydrogen-terminated polyorganosiloxane is used in molar excess with respect to the ratio of reactive hydrogen atoms to vinyl groups of the vinyl group and -Si(OR^{a})₃ group containing silane; and
wherein the first component (A) or the second component (B) or both comprise at least one titanium alkoxide.

In another aspect, the present invention relates to the use of the two-component silicone-based adhesive composition as described herein for bonding two or more substrates.

Further embodiments are defined in the appended claims.

"One or more", as used herein, relates to at least one and comprises 1, 2, 3, 4, 5, 6, 7, 8, 9 or more of the referenced species. Similarly, "at least one" means one or more, i.e. 1, 2, 3, 4, 5, 6, 7, 8, 9 or more. "At least one", as used herein in relation to any component, refers to the number of chemically different molecules, i.e. to the number of different types of the referenced species, but not to the total number of molecules.

In the present specification, the terms "a" and "an" and "at least one" are the same as the term "one or more" and can be employed interchangeably.

The term "about", as used in the context of the present invention, defines a range of +/- 10 %, preferably +/- 5 % of the specific value given.

All percentages given herein in relation to the compositions or formulations relate to weight % relative to the total weight of the respective composition or formula, if not explicitly stated otherwise.

The inventors of the present invention surprisingly found that the use of a reactive -Si(OR^{a})₃ terminated polyorganosiloxane prepolymer in combination with at least one epoxy silane and a titanium alkoxide, as disclosed herein, in silicone-based adhesive compositions results in improved adhesive properties of the respective cured adhesive product on different kinds of surfaces, in particular metal-based surfaces having a temperature over 200°C, preferably greater than 250°C, or more preferably from 250°C to 300°C. The polyaddition reaction may generate a strong and durable bonding to form a crosslinked material that is not affected by a reversion reaction. The present invention may provide stable mechanical properties, thermal and chemical stability, low shrinkage, and no by-products at temperatures over 200 °C.

An object of the present invention is therefore providing a two-component silicone-based adhesive composition comprising the prepolymer, the epoxy silane and the titanium alkoxide, as described herein, as adhesion promoter(s).

According to the present invention, the composition comprises a -Si(OR^{a})₃ terminated polyorganosiloxane prepolymer, obtainable by reacting (1) a hydrogen-terminated polyorganosiloxane with (2) a vinyl group or an allyl group and a -Si(OR^{a})₃ group containing silane in the presence of a catalyst. According to the present invention, the hydrogen-terminated polyorganosiloxane is used in molar excess with respect to the ratio of reactive hydrogen atoms to vinyl groups. In other words, the reactive hydrogen groups of the hydrogen-terminated polyorganosiloxane are in molar excess relative to the vinyl groups present in the vinyl group containing trialkoxy silane. In this way, a -Si(OR^{a})₃ terminated polyorganosiloxane prepolymer may be obtained that still includes reactive hydrogen groups, i.e. hydrosilyl groups.

In various embodiments, the hydrogen-terminated (hydrosilyl group-terminated) polyorganosiloxane additionally comprises hydrosilyl groups within the chain and not only at the termini. This then leads to a -Si(OR^{a})₃ containing polyorganosiloxane prepolymer that comprises the -Si(OR^{a})₃ group within the chain and/or at the termini and additionally comprises hydrosilyl groups within the polymer chain and/or at the termini.

In contrast to that, in case hydrogen-terminated polyorganosiloxanes without hydrosilyl groups within the chain are used, polyorganosiloxanes terminated with a hydrosilyl and/or a -Si(OR^{a})₃ group are obtained.

It is therefore understood that while the invention is mainly disclosed herein with reference to embodiments where the components are "hydrogen-terminated" and/or "-Si(OR^{a})₃ terminated", it similarly encompasses embodiments, where the respective hydrogen or -Si(OR^{a})₃ group is a pendant group within the polymer chain. It is also clear that in case of branched polymers, there may be more than two termini and that all the termini and, optionally, also the main polymer chain may include the indicated groups.

The term "reactive hydrogen atom" or "reactive hydrogen group", as used in the context of the present invention, relates to hydrogen atoms directly bonded to a silicon atom.

The term "vinyl group containing", as used herein, refers to a compound comprising at least one vinyl moiety, i.e. the moiety -CH=CH₂. Examples of vinyl group containing groups, as defined herein, that comprise one vinyl moiety include, for instance and without limitation, vinyl (ethenyl), allyl (2-propenyl), and 3-butenyl. Examples of vinyl containing groups, as defined herein, that comprise two vinyl moieties include, for instance and without limitation, hex-3,5-dienyl and octa-4,6-dienyl. The vinyl and -Si(OR^{a})₃ group containing silane is a molecule that comprises a vinyl group, as defined above, and the -Si(OR^{a})₃ group. The term "silane", as used in relation to such a molecule, includes compounds that have the - Si(OR^{a})₃ group as the only silicon containing group. In various embodiments, the vinyl and -Si(OR^{a})₃ group containing silane may be a vinyltrialkoxysilane, such as vinyltrimethoxysilane (VTMO), or an allyltrialkoxysilane, such as allyltrimethoxysilane (ATMO).

According to various embodiments, a ratio of SiH to vinyl groups may not drop below 1. Preferably, the ratio of SiH to vinyl groups may range from 1 to 1.5, preferably from 1.1 to 1.3. The ratio is important because if there is an excess of vinyl groups compared to SiH available, then at elevated temperatures, i.e. above 200° C, preferably above 250° C, a reaction may occur that leads to an embrittlement of the final adhesive composition. This particularly applies to conditions/compositions after the reaction of the prepolymers, as explained below.

According to various embodiments, the -Si(OR^{a})₃ terminated polyorganosiloxane prepolymer is a -Si(OR^{a})₃ terminated poly(diorganosiloxane) prepolymer, preferably a -Si(OR^{a})₃ terminated poly(dialkyl siloxane) prepolymer. Thus, according to various embodiments, a -Si(OR^{a})₃ terminated poly(diorganosiloxane) prepolymer is obtainable by reacting a SiH-terminated polysiloxane prepolymer, preferably a hydrogen-terminated poly(diorganosiloxane), such as hydrogen-terminated PDMS, with a vinyl group and -Si(OR^{a})₃ group containing silane in the presence of a catalyst. According to more preferred embodiments, a -Si(OR^{a})₃ terminated poly(dialkyl siloxane) prepolymer is obtainable by reacting a hydrogen-terminated poly(dialkyl siloxane) with a vinyl and -Si(OR^{a})₃ group containing silane in the presence of a catalyst. As mentioned above, all afore-mentioned prepolymers may additionally comprise hydrosilyl groups within the polymer chain. In various embodiments, the vinyl and -Si(OR^{a})₃ group containing silane may be a vinyltrialkoxysilane, such as vinyltrimethoxysilane (VTMO), or an allyltrialkoxysilane, such as allyltrimethoxysilane (ATMO).

"Alkyl", as used in the context of the present invention, relates to a linear or branched hydrocarbon group having 1 to 20 carbon atoms. As non-limiting examples thereof, methyl, ethyl, propyl, isopropyl, tert-butyl, n-pentyl, and isopentyl may be mentioned.

While it is preferred that the silyl-terminated poly(diorganosiloxane) prepolymer is a -Si(OR^{a})₃ terminated poly(dialkyl siloxane) prepolymer, in alternative embodiments the organic moieties in the poly(diorganosiloxane) may be aryl moieties, preferably phenyl, or alkyl and aryl moieties, such as the alkyl groups defined above and phenyl. Generally, the organic moiety ("organo") may thus be selected from alkyl and aryl moieties, as defined herein, while alkyl is typically preferred.

"Aryl", as used herein, relates to aromatic groups having 6 to 20 carbon atoms. As non-limiting examples thereof, phenyl, naphthyl, anthranyl, phenanthryl and the like may be mentioned, with phenyl being most preferred.

"OR^{a}", as used herein, represents a hydrolysable group. In various embodiments, each R^{a} is independently alkyl or acyl (-C(=O)-alkyl), with "alkyl" as defined above. In preferred embodiments, the OR^{a} groups are alkoxy groups. "Alkoxy", as used in the context of the present invention, relates to a linear or branched -O-alkyl group having 1 to 20 carbon atoms, wherein the alkyl group is as defined above. As non-limiting examples of alkoxy groups, methoxy, ethoxy, propoxy, isopropoxy, and tert-butoxy may be mentioned. Preferred are short-chain alkoxy groups, such as C₁₋₄ alkoxy, preferably methoxy, ethoxy and propoxy, more preferably methoxy and ethoxy, most preferably methoxy. In preferred embodiments OR^{a} is an alkoxy group and the -Si(OR^{a})₃ group containing compounds are trialkoxy silyl group-containing compounds. In alternative embodiments, one or more of the OR^{a} groups are acyloxy groups. "Acyloxy", as used in the context of the present invention, relates to a linear or branched -O-C(O)-alkyl group having 2 to 20 carbon atoms, wherein the alkyl group is as defined above. Preferred acyloxy groups are acetoxy groups.

According to certain embodiments, the alkyl groups of the hydrogen-terminated poly(dialkyl siloxane) are each independently methyl and/or ethyl, preferably methyl.

According to various embodiments, the hydrogen-terminated poly(dialkyl siloxane) is hydrogen-terminated poly(dimethyl siloxane). "Hydrogen-terminated", as used herein, refers to terminal hydrosilyl groups of the formula Si-H.

According to certain embodiments, the OR^{a} groups of the vinyl group containing silane are independently selected from the group consisting of methoxy, ethoxy, propoxy, isopropoxy, tert-butoxy, n-pentoxy, isopentoxy, neopentoxy, and tert-pentoxy. Preferred are short-chain alkoxy groups, such as C₁₋₄ alkoxy, preferably methoxy, ethoxy and propoxy, more preferably methoxy and ethoxy, most preferably methoxy. The vinyl group containing silane is thus preferably a trialkoxy silane, more preferably a triethoxy or trimethoxy silane, with the latter being particularly preferred.

According to various embodiments, the vinyl group containing silane is a trialkoxy or triacetoxy, preferably trialkoxy silane with a C₂₋₆ hydrocarbon moiety comprising a vinyl group. In more preferred embodiments, the vinyl group containing silane is an allyl trimethoxy silane (ATMO) or vinyl trimethoxy silane (VTMO). "Allyl", as used in this context, refers to the group H₂C=CH-CH₂-, and "vinyl" refers to the group H₂C=CH-.

The reaction between the hydrogen-terminated polyorganosiloxane, preferably the hydrogen-terminated poly(diorganosiloxane), more preferably the hydrogen-terminated poly(dialkyl siloxane), and the vinyl and -Si(OR^{a})₃ group containing silane, preferably a trialkoxy silane with a C₂₋₆ hydrocarbon moiety comprising a vinyl group, more preferably vinyl or allyl trimethoxy silane, is performed in the presence of a catalyst. The catalyst is a hydrosilylation catalyst that promotes the addition reaction of the two compounds as defined above. Typically, a catalyst may be employed in an amount of 0.01 to 3 % by weight, preferably 0.05 to 2.5 % by weight, based on the total weight of the -Si(OR^{a})₃ terminated polyorganosiloxane prepolymer or the combined weight of the reactants (hydrogen-terminated polyorganosiloxane and the vinyl and -Si(OR^{a})₃ group containing silane).

The catalyst can be any of the well-known hydrosilylation catalysts comprising a platinum group metal, a compound containing a platinum group metal, or a microencapsulated platinum group metal-containing catalyst. Platinum group metals include platinum, rhodium, ruthenium, palladium, osmium and iridium. Preferably, the platinum group metal is platinum, based on its high activity in hydrosilylation reactions. Thus, according to certain embodiments, the at least one hydrosilylation catalyst used in the synthesis of the prepolymer, that is, the at least one -Si(OR^{a})₃ terminated polyorganosiloxane prepolymer, preferably the at least one -Si(OR^{a})₃ terminated poly(diorganosiloxane) prepolymer, more preferably the at least one -Si(OR^{a})₃ terminated poly(dialkyl siloxane) prepolymer according to the present invention includes a platinum hydrosilylation catalyst.

Suitable hydrosilylation catalysts include the complexes of chloroplatinic acid and certain vinylcontaining organosiloxanes disclosed by Willing in U.S. Pat. No. 3,419,593, which is hereby incorporated by reference. A preferred catalyst of this type is the reaction product of chloroplatinic acid and 1,3-diethenyl-1,1,3,3-tetramethyldisiloxane, i.e. 1,3-divinyl-1,1,3,3-tetramethyldisiloxane-platinum(0). Preferred catalysts include platinum(0) complexes with divinyl tetramethyl disiloxane or with methyl vinyl cyclosiloxane, obtainable as Catalysts 512 and 520, respectively, from Evonik Industries.

According to the invention, the at least one epoxy silane can be a glycidyl trialkoxy silane, preferably a glycidyl trimethoxy silane, for example 3-glycidoxypropyltrimethoxysilane, commercially obtainable as Silquest^{®} A187 (Momentive Performance Materials Inc.). The amount of the at least one epoxy silane present within the second component (B) is from 0.3% to 1.2% by weight, preferably 0.5% to 0.9% by weight, based on the total weight of the component (B) of the silicone-based adhesive composition.

According to the invention, the at least one titanium alkoxide includes one or more of tetraethyl titanate, tetra isopropyl titanate (TIPT), tetra n-propyl titanate, tetra n-butyl titanate, tetra(2-ethylhexyl) titanate, isopropyl butyl titanate, tetrastearyl titanate, diisopropoxy-bis(acetylacetonato) titanium, di-n-butoxybis(triethanolaminoato)titanium, tributyl monoacetyltitanate triisopropyl monoacetyltitanate and tetrabenzoic acid titanate, and combinations thereof, preferably at least tetra n-butyl titanate. The amount of the at least one titanium alkoxide present within the first and/or second component (B) may range from 0.2% to 1% by weight, preferably 0.4% to 0.8% by weight, based on the total weight of the respective component, i.e. component (A) or (B), of the silicone-based adhesive composition.

In various embodiments, the first component (A) comprises at least one titanium alkoxide. In such embodiments, the second component (B) may be free of titanium alkoxides.

In various embodiments, the second component (B) comprises at least one titanium alkoxide. In such embodiments, the first component (A) may be free of titanium alkoxides.

In various embodiments, the first component (A) and the second component (B) both comprise at least one titanium alkoxide, which may be the same or different.

According to the invention, the components of the second component (B) (in the absence of the epoxy silane and optionally the titanium alkoxide) are mixed and reacted. This may mean that a reaction between the vinyl-terminated polysiloxane(s), such as PDMS, and the prepolymers having an excess of SiH groups occurs. Afterwards, the epoxy silane and optionally the titanium alkoxide are added to the mixture to fully form the second component (B). In various embodiments, first the epoxy silane and optionally subsequently the titanium alkoxide are added.

Similarly, the components of the first component (A) (in the absence of the titanium alkoxide, if present) may be mixed. This may mean that a reaction between the vinyl-terminated polysiloxane polymer(s) and the hydrosilyl-group containing crosslinker occurs. Afterwards, the titanium alkoxide, if present in component (A), may be added to the mixture to fully form the first component (A). However, in various embodiments, as component (A) may not contain a hydrosilylation catalyst, the mixture may remain unreacted and may only react once combined with component (B).

The addition of the epoxy silane(s) and the titanium alkoxide(s) may allow for stable adhesion of the two-component silicone-based adhesive composition to a surface that has a temperature ranging from 200°C to 300°C, preferably 250°C to 300°C. Alternatively, the two-component silicone-based adhesive composition may be stably adhered to a surface for an indefinite period of time when the temperature ranges from 200°C to 250°C. In various embodiments, the two-component silicone-based adhesive composition may be stably adhered to a surface for a period of up to 150 hours when the temperature ranges from 250°C to 300°C, preferably up to 100 hours.

In various embodiments, the titanium alkoxide may act as an adhesion promoter for certain substrates, such as those used in cooktop substrates, such as tempered glass, special coated steel, painted steel, etc. The titanium alkoxide, such as the tetra n-butyl titanate, may increase the speed and yield of the hydrolysis of the prepolymer, based, for example, on vinyl trimethoxy silane (VTMO) and/or allyl trimethoxy silane (ATMO). In various embodiments, a first prepolymer is included that is obtained by reacting a (bifunctional) SiH terminated polysiloxane, such as PDMS, with a vinyl silane, such as VTMO. In various embodiments, additionally to the first prepolymer a second prepolymer is included that is obtained by reacting (bifunctional) SiH terminated polysiloxane, such as PDMS, with another vinyl silane, for example an allyl silane, preferably ATMO. The stochiometry of using the hydrosilyl groups in molar excess relatively to the vinyl groups allows for end-capping of the SiH polysiloxane, such as PDMS, at one side with a -Si(OR^{a})₃ group, such as a trimethoxysilane group, while (statistically) the other side remains SiH. It is understood that due to reaction conditions a mixture of uncapped educts, completely end-capped products and partially end-capped products may be obtained. These -Si(OR^{a})₃ endcapping groups are hydrolyzed when in the presence of moisture and/or titanate. The hydrolyzed - Si(OR^{a})₃ groups may promote adhesion (bonding) on substrates like metal or glass. The titanium alkoxide catalyst increases the speed and the yield of the hydrolysis reaction.

In various embodiments, optional fillers may be included in the compositions, such as quartz, silica, carbon black, and combinations thereof. Generally, the fillers are preferably able to withstand/resist temperatures greater than 200, more preferably greater than 220°C. The optional fillers may be present in the silicone-based adhesive composition in an amount ranging from about 5 to 70 % by weight, preferably from 20 to 50 % by weight, based on the total weight of the component (B) of the silicone-based adhesive composition.

In various embodiments, the second component (B) may further include a hydrosilylation retardant agent, such as an organo polysiloxane, more preferably a divinyltetramethyldisiloxane, even more preferably 1,3-divinyltetramethyldisiloxane. The hydrosilylation retardant agent may be present within the second component (B) in an amount ranging from about 0.05 % to 0.3 % by weight, preferably 0.1 to 0.2 % by weight, based on the total weight of the component (B) of the silicone-based adhesive composition.

According to certain embodiments, in order to obtain a prepolymer particularly useful in the context of the present invention, it is crucial that the reactive hydrogen groups of the hydrogen-terminated polyorganosiloxane, preferably the hydrogen-terminated poly(diorganosiloxane), more preferably the hydrogen-terminated poly(dialkyl siloxane) are in molar excess, preferably more than 1.5fold molar excess, more preferably about 2fold molar excess relative to the vinyl groups of the vinyl group and - Si(OR^{a})₃ group containing silane. Thus, according to certain embodiments, the hydrogen-terminated polyorganosiloxane, preferably the hydrogen-terminated poly(diorganosiloxane), more preferably the hydrogen-terminated poly(dialkyl siloxane) is used in molar excess, preferably more than 1.5fold molar excess, more preferably about 2fold molar excess with respect to the ratio of reactive hydrogen atoms to vinyl groups. The prepolymer is thus a -Si(OR^{a})₃ terminated and SiH-group containing prepolymer. If reference is made herein to said "at least one -Si(OR^{a})₃ terminated polyorganosiloxane prepolymer", it is understood that this also comprises unreacted hydrosilyl groups.

The silicone-based adhesive composition according to the present invention contains the prepolymer, that is, the at least one -Si(OR^{a})₃ terminated polyorganosiloxane prepolymer, preferably the at least one -Si(OR^{a})₃ terminated poly(diorganosiloxane) prepolymer, more preferably the at least one -Si(OR^{a})₃ terminated poly(dialkyl siloxane) prepolymer in an amount in the range of 0.5 to 20 % by weight, preferably 1 to 10 % by weight, based on the total weight of the two-component silicone-based adhesive composition. The amounts relate to the total amount of all prepolymers used and falling within the given definition.

According to other embodiments, the prepolymer, that is, the at least one -Si(OR^{a})₃ terminated polyorganosiloxane prepolymer, preferably the at least one -Si(OR^{a})₃ terminated poly(diorganosiloxane) prepolymer, more preferably the at least one -Si(OR^{a})₃ terminated poly(dialkyl siloxane) prepolymer is present in the second component (B) (also called "Part B") of the adhesive composition according to the present invention in an amount of 1.5 to 30 % by weight, preferably 2 to 20 % by weight, based on the weight of the component (B) of the silicone-based adhesive composition. The amounts relate to the total amount of all prepolymers used and falling within the given definition.

Vinyl-terminated polysiloxane polymers useful in the context of the present invention are known in the art and may, for instance, be selected from compounds represented by the following formula (I):

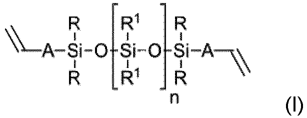

In formula (I), R and R¹ are independently selected from the group consisting of linear or branched alkyl groups having 1 to 20 carbon atoms, preferably 1 to 8 carbon atoms, A is independently selected from the group consisting of linear or branched alkylene having 1 to 10 carbon atoms or is absent, and n is 0 or an integer from 1 to 1500, for example 1 to 500. In particular, n is selected such that the viscosity of the compound according to formula (I) ranges from 1 to 165,000 mPa.s at 25 °C. According to preferred embodiments, R and R¹ are independently selected from the group consisting of methyl, ethyl, n-propyl and isopropyl. According to certain embodiments, A is absent or selected from methylene. Especially preferred examples of vinyl-terminated polysiloxane polymers are vinyl-terminated polydimethyl siloxane (PDMS) polymers. The vinyl content of the vinyl-terminated polysiloxane polymers may vary, resulting in polymers of different reactivity and viscosity. Especially preferred examples of vinyl-terminated polydimethyl siloxane polymers include, without limitation, the Polymer VS series from Evonik Industries.

Further vinyl-terminated polymers useful in the context of the present invention include those of formula (I) above, wherein at least one R or R¹ is -O-Si(R)₂-[Si(R¹)₂-O]ₙ-A-CH=CH₂ with n and A as defined above and R and R¹ being independently selected from the group consisting of linear or branched alkyl groups having 1 to 20 carbon atoms, preferably 1 to 8 carbon atoms, or -O-Si(R)₂-[Si(R¹)₂-O]ₙ-A-CH=CH₂. Generally, vinyl-functionalized siloxanes comprising M, D, T and/or Q units can be used. Vinyl-functionalized MQ resins are, for example, commercially available from Evonik Industries.

The vinyl-terminated polysiloxane polymers, as described above, may be used as such or may be a mixture of two or more of the aforementioned polymers. Particularly preferred are mixtures of linear vinyl-terminated PDMS polymers and vinyl-functional MQ resins (tridimensional PDMS, vinyl functionalized), which are commercially available as VQM Polymer from Evonik Industries.

According to the present invention, the amount of the vinyl-terminated polysiloxane polymers in the silicone-based adhesive composition as described herein may be in the range of 1 to 90 % by weight, preferably 10 to 80 % by weight, more preferably 20 to 80 % by weight, in particular 30 to 80 % by weight, based on the total weight of the two-component silicone-based adhesive composition.

According to the present invention, the amount of the vinyl-terminated polysiloxane polymers in the second composition (B) (also called "Part B") of the silicone-based adhesive composition as described herein may be in the range of 10 to 90 % by weight, preferably 10 to 80 % by weight, more preferably 20 to 80 % by weight, in particular 30 to 80 % by weight, based on the weight of the component (B) of the silicone-based adhesive composition. The amount of the vinyl-terminated polysiloxane polymers in the first composition (A) (also called "Part A") of the silicone-based adhesive composition as described herein may be in a similar range as in the component (B), i.e. in the range of 10 to 90 % by weight, preferably 10 to 80 % by weight, more preferably 20 to 80 % by weight, in particular 30 to 80 % by weight, based on the weight of the component (A) of the silicone-based adhesive composition.

In the two-component silicon-based adhesive compositions according to the present invention, the prepolymer, as described herein, can be mixed with at least one vinyl-terminated polysiloxane polymer, as described above, wherein the vinyl-terminated polysiloxane polymers are, with respect to the vinyl groups, used in molar excess relative to the hydrosilyl groups of the prepolymer. Preferably, after the reaction between the vinyl-terminated polysiloxane polymer and the prepolymer, at least 50% mole of the vinyl groups should be in excess compared to the hydrosilyl groups of the prepolymers such that no SiH remains after the reaction is completed. Upon mixing, the prepolymer and the vinyl-terminated polysiloxane polymers undergo further addition polymerization, wherein the hydrosilyl groups of the prepolymer react with the vinyl groups of the vinyl-terminated polysiloxane polymers. The resultant polymers exhibit both vinyl groups, which are accessible to further addition polymerization reactions with hydrosilylation crosslinking agents, and trialkoxy silane end capping groups, which promote and improve adhesion of the eventually cured system to various surfaces. The mixing can occur already within component (B) so that the prepolymer reacts before it comes into contact with component (A). In any case, the formulation of the component (B) (i.e., part B) is done such that the vinyl groups are always in molar excess compared to the hydrogen groups of the prepolymer.

Hydrosilylation catalysts useful in the context of the present invention are known in the art and may, for instance, be selected from the hydrosilylation catalysts discussed above with respect to the preparation of the prepolymer according to the present invention.

The hydrosilylation catalyst may be present in the silicone-based adhesive composition in an amount of 0.01 to 5 % by weight, preferably 0.02 to 4.5 % by weight, based on the total weight of component (B) of the two-component silicon-based adhesive composition.

Crosslinking agents (also called "crosslinkers") suitable in the context of the present invention are known in the art and may include, for instance, compounds that comprise at least two, preferably more than two hydrosilyl-groups. Preferred are modified PDMS polymers with SiH groups at the termini and, optionally, also within the chain.

Generally, from 0.1 to 8 % by weight, preferably 0.2 to 7.5 % by weight of the crosslinking agent may be employed, based on the total weight of component (A) of the two-component silicone-based adhesive composition. Within component (A), the crosslinking agent may be used in amounts such that the SiH groups are in molar excess to the vinyl groups. As component (B) is formulated such that the vinyl groups are in excess, this means that a further reaction occurs once components (A) and (B) are mixed. To prevent premature reaction, components (A) and (B) may be spatially separated in the compositions of the invention, for example provided in separate containers, and only be combined/mixed before use.

The silicone-based adhesive composition according to the present invention may optionally comprise one or more further additives known in the art for the employment in silicone-based adhesive compositions. For instance, one or more additives suitable for employment in the context of the present invention may be selected from the group consisting of fillers and pigments.

Pigments that may be useful in the context of the present invention include carbon blacks, such as LB-1011C carbon black from Williams, chromium oxide pigments, such as Harcros G-6099, and titanium dioxides such as those available from DuPont.

Fillers suitable in this context are known in the art and may, for instance, be selected from one or more of crushed quartz, aluminum oxide, aluminum hydroxide, aluminum silicate, zirconium silicate, magnesium oxide, magnesium hydroxide, zinc oxide, talc, diatomaceous earth, iron oxide, calcium carbonate, clays, titania, zirconia, silica, fumed silica, mica, glass, sand, carbon black, graphite, barium sulfate, zinc sulfate, wood flour, cork, and fluoro-carbon polymer powder among others. The filler may be treated with conventional organosilicon treating agents which are well known in the art.

Of course, it is anticipated that the silicone-based adhesive composition according to the present invention may comprise further additives known and useful in this context, such as other silane- or siloxane-based compounds, including monomeric and polymeric compounds thereof.

If the at least one vinyl-terminated polysiloxane polymer is used in molar excess relative to the prepolymer, as described herein, the polyaddition reaction of these two components results in polymers having both vinyl groups, which are accessible to further addition polymerization reactions with hydrosilylation crosslinking agents, and trialkoxy silane end capping groups, which promote and improve adhesion of the eventually cured system to various surfaces, as described above. For the two-component silicone-based adhesive composition according to the present invention, the formation of such a polymer occurs in the preparation of the second component (B), that is, prior to the mixing of components (A) and (B). Methods for the preparation of both the component (A), as described herein, and the component (B), as described herein, are known in the art.

The two components (A) and (B) are stored separately until use. For use, the two components are mixed together in a manner known *per se.* In separated form, the two components (A) and (B) are storagestable.

The silicone-based adhesive compositions of the invention may be liquid at application temperatures. It is preferred that the silicone-based adhesive compositions of the invention are liquid at room temperature. In various embodiments, the adhesive compositions according to the present invention have a viscosity of 50 to 200,000, especially 1,000 to 100,000 mPas at a temperature of 25 °C measured with Haake PK100 (RV 20 or RV30), RT 20, Physica MCR 301 or equivalent rheometers. "Liquid", as used herein, includes gels and pastes.

The adhesives can be applied to the substrate(s) by all known techniques. For example, dual cartridges and a pneumatic gun can be used for dispensing. The mixing can be done with a static mixer.

Thus, another embodiment of the invention is a method of use of the silicone-based adhesive compositions according to the present invention. In various embodiments, such a method encompasses a process of applying the adhesive composition to the surface of a substrate, whereby the adhesive is a silicone-based adhesive compositions as described above. In the case of a two-component silicone-based adhesive composition, as described herein, the two components (A) and (B) of the adhesive are mixed immediately before application. The adhesive composition is subsequently applied to the surface of the substrate.

The substrates include all conventional substrates used for silicone-based adhesive bonding, including, but not limited to metal, such as aluminum, glass, ceramics, stone, wood, etc. Typical uses include, but are not limited to, cooktop bonding, oven bonding, and other uses including those where the adhesive is exposed to high temperatures.

Given the surprising finding that the -Si(OR^{a})₃ terminated polyorganosiloxane prepolymer in combination with an epoxy silane and a titanium alkoxide, as described herein, promotes and improves adhesion of polysiloxane-based adhesive compositions to various surfaces, a further object of the present invention is the use of a combination of a -Si(OR^{a})₃ terminated polyorganosiloxane prepolymer, obtainable by reacting a hydrogen-terminated polyorganosiloxane with a vinyl and -Si(OR^{a})₃ group containing silane, as described above, an epoxy silane and a titanium alkoxide as an adhesion promoter in silicone-based adhesive compositions. Preferably, the ratio of SiH to Vinyl groups is above 1, more preferably the ratio ranges from 1.1 to 1.5, and even more preferably from 1.1 to 1.3. In addition, it was found that optional fillers may be included in part (B) of the two-component based silicone composition; such fillers may include quartz, silica, carbon black, and combinations thereof. Generally, fillers suitable for high temperature applications are used and particularly suitable.

It is understood that all embodiments disclosed herein in relation to the methods are similarly applicable to the disclosed dispersions, compositions, and uses and *vice versa.*

The following examples are given to illustrate the present invention. Because these examples are given for illustrative purposes only, the invention should not be deemed limited thereto.

### Examples

Tables 1-6 disclose the two components used and the methods of producing the 2-component silicon-based adhesive composition, which is then compared to other 1-component and 2-component polycondensation cure silicones, below.

**Table 1: Part A formulation (A1)**

| | **Wt%** |
|---|---|
| Vinyl-terminated polydimethylsiloxane (Polymer VS 5000 cP (Evonik Industries)) (wt. %) | 29 |
| vinyl content: 0.06 mmol/g | |
| Vinyl-terminated polydimethylsiloxane (Polymer VS 1000 cP (Evonik Industries)) (wt. %) | 23.1 |
| vinyl content: 0.11 mmol/g | |
| Cristobalite powder surface treated (Silbond 8000 TST) | 40 |
| Fumed silica Trated (Aerosil R974) | 4 |
| Carbon black (Printex L-Beads) | 1 |
| Hydrosilylation crosslinking agent (Crosslinker 200) | 1.9 |
| SiH content: 3.2 mmol/g | |
| SiH-terminated polydimethyl siloxane (Modifier 715) | 1 |
| SiH content: 2.9 mmol/g | |

**Table 2: Part A formulation (A2)**

| | **Wt%** |
|---|---|
| Vinyl-terminated polydimethylsiloxane (Polymer VS 5000 cP (Evonik Industries)) (wt. %) | 29 |
| vinyl content: 0.06 mmol/g | |
| Vinyl-terminated polydimethylsiloxane (Polymer VS 1000 cP (Evonik Industries)) (wt. %) | 23.1 |
| vinyl content: 0.11 mmol/g | |
| Cristobalite powder surface treated (Silbond 8000 TST) | 38.5 |
| Fumed silica Trated (Aerosil R974) | 4 |
| Tetra-n-buyl titanate (Tyzor TnBT) | 0.5 |
| Carbon black (Printex L-Beads) | 1 |
| Hydrosilylation crosslinking agent (Crosslinker 200) | 1.9 |
| SiH content: 3.2 mmol/g | |
| SiH-terminated polydimethyl siloxane (Modifier 715) | 1.5 |
| SiH content: 2.9 mmol/g | |

The ingredients are mixed and reacted at 25°C temperature. The temperature for mixing the ingredients of Part A formulation may range from room temperature (about 25° C to about 70° C).

**Table 3: Part B formulation (B1)**

| | **Wt%** |
|---|---|
| Vinyl-terminated polydimethylsiloxane (Polymer VS 500 cP (Evonik Industries)) (A) | 55.5 |
| vinyl content: 0.14 mmol/g | |
| Vinyl-terminated polydimethylsiloxane (Polymer VS 200 cP (Evonik Industries)) (B) | 18 |
| vinyl content: 0.25 mmol/g | |
| Vinyl-terminated polydimethylsiloxane (Polymer VS 1000 cP (Evonik Industries)) | 2.25 |
| vinyl content: 0.11 mmol/g | |
| Fumed silica treated (Aerosil R974) | 9 |
| Titanium Dioxide (TR92) | 0.25 |
| tetra-n-butyl titanate (Tyzor TnBT) | 0.5 |
| Glycidyl trimethoxy silane (Silquest A 187) | 0.6 |
| 1,3-Divinyltetramethyldisiloxane solution 10% in PDMS 2000 cp vinyl terminated | 1.3 |
| Pt Catalyst 512 (E) | 0.6 |
| Prepolymer (vinyltrimethoxy silane) (C) | 6.3 |
| Prepolymer (allyltrimethoxy silane) (D) | 6.3 |

**Table 4: Part B formulation (B2)**

| | **Wt%** |
|---|---|
| Vinyl-terminated polydimethylsiloxane (Polymer VS 500 cP (Evonik Industries)) (A) | 55.4 |
| vinyl content: 0.14 mmol/g | |
| Vinyl-terminated polydimethylsiloxane (Polymer VS 200 cP (Evonik Industries)) (B) | 18 |
| vinyl content: 0.25 mmol/g | |
| Fumed silica treated (Aerosil R974) | 6.75 |
| Titanium Dioxide (TR92) | 0.25 |
| Aluminium Hydroxide (Martinal ON313) | 5 |
| Glycidyl trimethoxy silane (Silquest A 187) | 0.4 |
| 1,3-Divinyltetramethyldisiloxane solution 10% in PDMS 2000 cp vinyl terminated | 1 |
| Pt Catalyst 512 (E) | 0.6 |
| Prepolymer (vinyltrimethoxy silane) (C) | 6.3 |
| Prepolymer (allyltrimethoxy silane) (D) | 6.3 |

In a first step, the materials noted as (A), (B), (C), (D), and (E) were reacted together at a temperature of 50°C for one hour. The temperature was then lowered to 25°C, and then the remaining materials were added to the vessel.

Parts B include "prepolymer VTMO" and "prepolymer ATMO", which are further disclosed in Tables 5-6, below. Prepolymer VTMO and prepolymer ATMO are mixed according to Tables 5-6, respectively, and then the respective weight percentage of each of prepolymer VTMO and prepolymer ATMO is added to the formulation for Part B as noted in Tables 3 and 4.

**Table 5: Prepolymer (vinyltrimethoxysilane)**

| | **Wt%** |
|---|---|
| vinyltrimethoxy silane (VTMO) | 17.85 |
| vinyl content: 6.76 mmol/g | |
| SiH-terminated polydimethyl siloxane (Modifier 715) | 81.95 |
| SiH content: 2.9 mmol/g | |
| Pt Catalyst 512 | 0.6 |

The ingredients for the 'prepolymer (vinyltrimethoxy silane)' are mixed and reacted at 25°C. However, as the reaction is exothermic, temperature quickly increases to about 80°C. Other necessary conditions for the mixing and reacting of the ingredients include mixing under nitrogen flux.

**Table 6: Prepolymer (allyltrimethoxysilane)**

| | **Wt%** |
|---|---|
| allyltrimethoxy silane (ATMO) | 19 |
| vinyl content: 6.17 mmol/g | |
| SiH-terminated polydimethyl siloxane (Modifier 715) | 80.85 |
| SiH content: 2.9 mmol/g | |
| Pt Catalyst 512 | 0.15 |

The ingredients for the 'prepolymer (allyltrimethoxy silane)' are mixed and reacted at 25°C. However, as the reaction is exothermic, temperature quickly increases to about 80°C. Other necessary conditions for the mixing and reacting of the ingredients include mixing under nitrogen flux.

Once the two components (Part A and Part B) are individually prepared, the combination of Part A and Part B (Part A1 and Part B1; Part A2 and Part B2) are mixed according to a mixing ratio of 10:1 by volume.

**Table 7: The cured properties of the resulting silicone elastomer (A1 and B1) after two weeks at 25°C/ 50% R.H.**

| | |
|---|---|
| Tensile Strength | 3.5-3.7 MPa |
| Elongation | 270-300% |
| Shore A Hardness | 39-43 |
| Adhesion to Alclad aluminum | 1.87 MPa (cohesive failure) |

**Table 8: The cured properties of the resulting silicone elastomer (A1 and B1) after two weeks at 25°C/ 50% R.H., plus 6 weeks at 250°C.**

| | |
|---|---|
| Tensile Strength | 2.9-3.0 MPa |
| Elongation | 190-210% |
| Shore A Hardness | 45-49 |
| Adhesion to Alclad aluminum | 1.20 MPa (cohesive failure and no bubbles) |

**Table 9: The cured properties of the resulting silicone elastomer (A2 and B2) after two weeks at 25°C/ 50% R.H.**

| | |
|---|---|
| Tensile Strength | 2.5-2.7 MPa |
| Elongation | 400-450% |
| Shore A Hardness | 25-30 |
| Adhesion to Alclad aluminum | 1.6 MPa (cohesive failure) |

**Table 10: The cured properties of the resulting silicone elastomer (A2 and B2) after two weeks at 25°C/ 50% R.H., plus 6 weeks at 250°C.**

| | |
|---|---|
| Tensile Strength | 2.9-3.0 MPa |
| Elongation | 150-170% |
| Shore A Hardness | 50-53 |
| Adhesion to Alclad aluminum | 2.3 MPa (cohesive failure and no bubbles) |

Shore A Hardness is a scale that measures the hardness of a flexible material. The Shore A hardness is measured using a durometer where the measured hardness is determined by a penetration depth of an indenter under the load. The durometer has a needle on a spring protruding from one end where the needle is placed against the silicone elastomer and pressure is applied. Shore hardness was measured according to ISO 868.

Adhesion to Alclad aluminum corresponds to the ability of a adhesive to adhere to an aluminum substrate. The present invention was bonded between two aluminum substrates, and a measurement was taken after 14 days. The measurement correlates to the force necessary to unbond the two aluminum substrates based on a lap shear test. The procedure is noted in more detail below with respect to the procedure.

Procedure: The formulation is spread on one lap-shear specimen of sufficient quantity such that when the lap-shear specimens are mated a 322.6 mm2 (0.5 in.2) area will be completely covered. If necessary, spread the adhesive using an appropriate utensil (applicator stick, tongue depressor, etc.) so as to ensure complete coverage of the bond area. Five specimens were used for each determination. The assembled lap shear was allowed to cure under normal conditions (23+/-2°C, relative humidity 50+/- 5%) for 14 days. The test was carried out under normal conditions (23+/-2°C, relative humidity 50+/-5%) and the measurement was carried out after 14 days of curing. The test specimens have to be at the same temperature at which the measurement will take place. Place the test specimen in the grips of the testing machine so that the long axis of the test specimen coincides with the direction of applied tensile force through the center line of the grip assembly. Then the lap shear specimen is stretched to <0.1 MPa with a rate of 50 mm / min. Then, the force-joint deplacement curve is recorded with a line speed of 50 mm/min.

### Tensile strength/Elongation/Modulus

Tensile strength and elongation at break were determined according to DIN 53504. Dumbbell specimens with the following dimensions were used: thickness 2 +/- 0.2 mm; bar width 10 +/- 0.5 mm; bar length approx. 45 mm; and total length 9 cm.

Procedure: the prepolymer mixture (formulation) was spread on an even surface forming a film with a thickness of 2 mm. The film was allowed to cure under normal conditions (23+/-2°C, relative humidity 50+/-5%) for 14 days, and then the dumbbell specimen was punched out. Five specimens were used for each determination. The test was carried out under normal conditions (23+/-2°C, relative humidity 50+/-5%) and the measurement was carried out after 14 days of curing. The test specimens have to be at the same temperature at which the measurement will take place. Before the measurement, the thickness of the test specimens is determined at least at three different positions, at the middle and at the extremes, with a caliper. The mean value is introduced in the measuring software. The test specimens are clamped into the tensile tester so that the longitudinal axis coincides with the mechanical axis of the tensile tester and comprises the largest possible surface of the rod heads, without clamping the middle bar. Then the dumbbell is stretched to <0.1 MPa with a rate of 50 mm / min. Then, the forceelongation curve is recorded with a line speed of 500 mm/min.

Evaluation: The following values are determined - breaking force in [N/mm²], elongation at break in [%], and modulus of elasticity in [N/mm²] at 100% elongation.

**Table 11: The components within the adhesive composition known as "Copper Loctite SI 5920" in the Examples, below. Copper Loctite SI 5920 is referred to as a "one-component" composition. The individual components were mixed together at a temperature of 50°C and conditions including vacuum and a nitrogen flux step. The final composition was tested according to the above-mentioned procedures, and the results are noted in the Examples, below.**

| Raw Material | wt% |
|---|---|
| PDMS, 20,000 cP, hydroxy-terminated ( BLUESIL FLD 48V20000 (Elkem)) | 59.63 |
| Vinyl oximo silane (OS 2000 ( Evonik industries)) | 6.50 |
| Fumed silica Trated (HDK H20 (WACKER CHEMIE)) | 7.77 |
| PDMS, 1,000 cP, Methyl-terminated (47 V 1000 (Elkem) | 16.20 |
| Dimethyltin dineodecanoate (Formez UL 28 (Momentive performance material)) | 0.10 |
| 3-(Trimethoxysilyl)propylamine (Silane A 1110 (Momentive performance material)) | 0.10 |
| [3-(trimethoxysilyl)propyl]urea (Silane Y 11468 (GE SPECIALITIES)) | 1.00 |
| CERIUM OCTOATE (CE 12 HEX-CEM E (BORCHERS GMBH)) | 0.70 |
| Copper paste in silicone oil (Copper 718 (Sioen Chemicals)) | 8.00 |

**Table 12: The components within the adhesive composition known as "Loctite SI 596" in the Examples, below. Loctite SI 596 is also referred to as a "one-component" composition. The individual components were mixed together at a temperature of 50°C and conditions including vacuum and a nitrogen flux step. The final composition was tested according to the above-mentioned procedures, and the results are noted in the Examples, below.**

| Raw Material | wt% |
|---|---|
| PDMS, OH Terminated, 6000 mPas-LV (POLYMER 6000 LV (Elkem)) | 36.200 |
| PDMS, OH Terminated, 2000 mPas-LV (POLYMER 2000 LV (Elkem)) | 36.200 |
| Micronized iron oxide (Bayferrox 130 M LANXESS)) | 10.553 |
| Hydrophylic fumed silica (Aerosil 200 (EVONIK Industries)) | 12.500 |
| Methyltriacetoxysilane (Crosslinker ES 15 (WACKER CHEMIE)) | 3.685 |
| Dioctyltin dineodecanoate (Fomrez UL38 (Momentive performance material)) | 0.050 |
| Di-tert-butoxydiacetoxysilane (DYNASYLAN BDAC (EVONIK Industries)) | 0.812 |

**Tables 13A-13B:** The components within the adhesive composition known as "Oxime Product LFD 666" in the Examples, below. Oxime Product LFD 666 is known as a two-component composition because there is a "part A" and a "part B". The Part A components were mixed at a temperature of 25°C and conditions including Vacuum steps. The Part B components were mixed at a temperature of 50°C and conditions including Vacuum and nitrogen flux step. The two-components (Part A and Part B) were then mixed together at a temperature of 25°C and conditions including with a static mixer. The two components were also mixed at a ratio of 4:1. The final composition was tested according to the above-mentioned procedures, and the results are noted in the Examples, below.

**Table 13A: Part A of Oxime Product LFD 666**

| Raw Material | wt% |
|---|---|
| PDMS, OH Terminated, 20000 mPas-LV (POLYMER 20000 LV (Elkem)) | 50.00 |
| PDMS, OH Terminated, 6000 mPas-LV (POLYMER 6000 LV (Elkem)) | 13.50 |
| Micronized precipitated silica (Zeothix 95 (EVONIK Industries)) | 4.00 |
| Copper paste (Rame AK 45 (Ecka Granules Eckart)) | 2.50 |
| Carbon Black (Printex L Beads (EVONIK Industries)) | 5.00 |
| Quartz (Silbond 8000 TST (Sibelco)) | 24.80 |
| 1,1,1,3,3,3-HEXAMETHYLDISILAZANE (Dynasilan HDMS (EVONIK Industries)) | 0.20 |

**Table 13B: Part B of Oxime Product LFD 666**

| Raw Material | wt% |
|---|---|
| PDMS, 5,000 cP, Methyl-terminated (47 V 5000 (Elkem) | 37.13 |
| PDMS, 1,000 cP, Methyl-terminated (47 V 1000 (Elkem) | 7.80 |
| Hydrophobic treated silica (R8200 (EVONIK Industries)) | 10.25 |
| Quartz (Silbond 8000 TST (Sibelco)) | 32.80 |
| Oxime crosslinker (LM400 (NITROCHEMIE ASCHAU GmbH)) | 8.50 |
| 3 Aminopropyltrimethoxysilane (A1100 (EVONIK Industries)) | 2.92 |
| Dimethyltin dineodecanoate (Formez UL 28 (Momentive performance material)) | 0.60 |
| 1,1,1,3,3,3-HEXAMETHYLDISILAZANE (Dynasilan HDMS (EVONIK Industries)) | 0.30 |

**Table 14A-14B:** The components within the adhesive composition known as "Alkoxy Product Loctite 5612" in the Examples, below. Alkoxy Product Loctite 5612 is known as a two-component composition because there is a "part A" and a "part B". The Part A components were mixed at a temperature of 25°C and conditions including a vacuum step. The Part B components were mixed at a temperature of 50°C and conditions including vacuum and a nitrogen flux step. The two-components (Part A and Part B) were then mixed together at a temperature of 25°C and conditions including with a static mixer. The two components were also mixed at a ratio of 4:1. The final composition was tested according to the above-mentioned procedures, and the results are noted in the Examples, below.

**Table 14A: Part A of Alkoxy Product Loctite 5612**

| Raw Material | wt% |
|---|---|
| PDMS, OH Terminated, 6000 mPas-LV (POLYMER 6000 LV (Elkem)) | 47.70 |
| Quartz (Sikron B300 (Sibelco)) | 22.50 |
| Coated Precipitated calcium carbonate (Socal 322 (Solvay)) | 19.80 |
| Micronized iron oxide (Bayferrox 130 M LANXESS)) | 10.00 |

**Table 14B: Part B of Alkoxy Product Loctite 5612**

| Raw Material | wt% |
|---|---|
| PDMS, 5,000 cP, Methyl-terminated (47 V 5000 (Elkem) | 31.102 |
| Calcium carbonate (Atomfor S (OMYA)) | 57.399 |
| 3-(Trimethoxysilyl)propylamine (Silane A 1110 (Momentive performance material)) | 2.145 |
| Methyltrimethoxysilane (Silane A-1630 (Momentive performance material)) | 5.700 |
| Dioctyltin dineodecanoate (Fomrez UL38 (Momentive performance material)) | 0.417 |
| 1,1,1,3,3,3-HEXAMETHYLDISILAZANE (Dynasilan HDMS (EVONIK Industries)) | 0.933 |
| Fumed silica Trated (Aerosil R974 (EVONIK Industries)) | 2.304 |

### Example 1

The properties of the two-component silicone-based adhesive composition of the present invention are compared to the Copper Loctite SI 5920 and Loctite SI 596 one-component compositions. The two-component silicone-based adhesive composition of the present invention is stable at temperatures over 200 C as compared with the one-component silicone compositions. A few advantages of the present invention pertain to the thermal resistance of the resulting product of the present invention after the exposure of the lap shear samples to high temperature (aging tests). This test simulates the sealing application at a customer's site where the silicone composition is applied between two substrates. The two-component silicone composition of the present invention does not generate any bubbles at temperatures greater than 200 C; whereas, the one-component silicone compositions exhibit bubble formation and reversion. The bubbles generated as a by-product, after the condensation cure reaction, cannot completely leave the sealing area (only a few of the bubbles are in direct contact with the air).

The trapped by-products have a low boiling point, causes bubbles once the product is heated. Moreover, the comparison of the handling time, i.e. the waiting time before moving the bonded pieces, shows that the two-component silicone composition has a faster bulk curing time than the one-component silicone compositions.

**Table 15: A two-component silicone composition of the present invention was compared to other one-component silicone compositions.**

| | Two-component Silicone Composition as disclosed in Tables 1,3,5-8 | Copper Loctite SI 5920 | Loctite SI 596 |
|---|---|---|---|
| **Tensile Strength, Psi** | | | |
| original, 7 day @ RT | 500 | 200 | 220 |
| heat aged@ 300° C, 3 days | 380 | 215 | - |
| heat aged@ 300° C, 21 days | 460 | 100 | 115 |
| heat aged@ 300° C, 42 days | 420 | 135 | - |
| | | | |
| **Elongation, %** | | | |
| original, 7 day @ RT | 270 | 350 | 450 |
| heat aged@ 300° C, 3 days | 190 | 170 | - |
| heat aged@ 300° C, 21 days | 240 | 320 | 620 |
| heat aged@ 300 C, 42 days | 150 | 370 | - |
| | | | |

| **Hardness, Shore A** | | | |
|---|---|---|---|
| original, 7 day @ RT | 42 | 17 | 17 |
| heat aged@ 300 C, 3 days | 46 | 30 | - |
| heat aged@ 300 C, 21 days | 43 | 10 | 5 |
| heat aged@ 300 C, 42 days | 52 | 13 | - |
| | | | |

| **Lap Shear Strength, psi** | | | |
|---|---|---|---|
| original, 7 day @ RT | 174 | 115 | 105 |
| heat aged@ 300 C, 3 days | 150 | 60 (with bubbles) | - |
| heat aged@ 300 C, 21 days | 406 | 170 (with bubbles) | 80 |
| heat aged@ 300 C, 42 days | 377 | 215 (with bubbles) | - |
| | | | |
| **By-products** | NO | Oxime | Acetic Acid |
| **Handling time** | 0.5 hour | 7-8 hours | 7-8 hours |

Handling time is noted as the amount of time to wait before moving the bonded pieces without causing a debonding of the adhesive.

### Example 2

In the following example, the two-component silicone composition was compared to other two-component silicone compositions.

The properties of the two-component silicone-based adhesive composition of the present invention are compared to Oxime Product LFD 666 and Alkoxy Product Loctite 5612 two-component compositions. The two-component silicone-based adhesive composition of the present invention is stable at temperatures over 200 C as compared with the two-component silicone compositions. The two-component silicone composition of the present invention has the best adhesion compared to the other two component silicone compositions after being exposed to high temperatures, and no bubbles form in the sealing area.

The Oxime Product LFD 666 also has an oxime by-product, which is a significant disadvantage in terms of generated by-products.

**Table 16: A two-component silicone composition of the present invention was compared to other available two-component silicone compositions.**

| | Two-component Silicone Composition as disclosed in Tables 1, 3, 5-8 | Oxime Product LFD 666 | Alkoxy Product Loctite 5612 |
|---|---|---|---|
| **Tensile Strength, Psi** | | | |
| original, 7 day @ RT | 500 | 360 | 305 |
| heat aged@ 300 C, 21 days | 380 | 215 | 680 |
| heat aged@ 300 C, 42 days | 420 | 225 | 0 |
| | | | |

| **Elongation, %** | | | |
|---|---|---|---|
| original, 7 day @ RT | 270 | 305 | 135 |
| heat aged@ 300 C, 21 days | 190 | 295 | 10 |
| heat aged@ 300 C, 42 days | 150 | 300 | 1 |
| | | | |

| **Hardness, Shore A** | | | |
|---|---|---|---|
| original, 7 day @ RT | 42 | 27 | 48 |
| heat aged@ 300 C, 21 days | 46 | 22 | 94 |
| heat aged@ 300 C, 42 days | 52 | 36 | 67 |
| | | | |

| **Lap Shear Strength, psi** | | | |
|---|---|---|---|
| original, 7 day @ RT | 174 | 220 | 230 |
| heat aged@ 300 C, 21 days | 150 | 55 (with bubbles) | 180 (with bubbles) |
| heat aged@ 300 C, 42 days | 377 | 115 (with bubbles) | 110 (with bubbles) |
| | | | |
| **By-products** | NO | Oxime | Methanol/Ethanol |
| **Handling time** | 0.5 hour | 0.5 hour | 0.5 hour |

## Claims

1. A two-component silicone-based adhesive composition comprising:
a first component (A) comprising:
at least one vinyl-terminated polysiloxane polymer; and
at least one hydrosilyl group-containing crosslinker; and
a second component (B) comprising:
at least one -Si(OR^{a})₃ terminated polyorganosiloxane prepolymer;
a hydrosilylation catalyst;
at least one vinyl-terminated polysiloxane polymer,
wherein OR^{a} is a hydrolysable group, with each R^{a} preferably and independently being alkyl or acyl, and the -Si(OR^{a})₃ terminated polyorganosiloxane prepolymer is obtainable by reacting a hydrogen-terminated polyorganosiloxane with a vinyl and -Si(OR^{a})₃ group containing silane in the presence of a catalyst, wherein the hydrogen-terminated polyorganosiloxane is used in molar excess with respect to the ratio of reactive hydrogen atoms to vinyl groups of the vinyl and -Si(OR^{a})₃ group containing silane; and
at least one epoxy silane in an amount of from 0.3% to 1.2% by weight, preferably 0.5% to 0.9% by weight, based on the total weight of the component (B);
wherein first component (A), second component (B), or both comprise a titanium alkoxide adhesion promoter.

2. The two-component silicone-based adhesive composition according to claim 1, wherein the at least one epoxy silane is a glycidyl trialkoxy silane, preferably a glycidyl trimethoxy silane.

3. The two-component silicone-based adhesive composition according to any one of the preceding claims, wherein the titanium alkoxide adhesion promoter
(1) is comprised in the second component (B); and/or
(2) is comprised in the first component (A); and/or
(3) includes one or more of tetraethyl titanate, tetra isopropyl titanate (TIPT), tetra n-propyl titanate, tetra n-butyl titanate, tetra(2-ethylhexyl) titanate, isopropyl butyl titanate, tetrastearyl titanate, diisopropoxy-bis(acetylacetonato) titanium, di-n-butoxy-bis(triethanolaminoato)titanium, tributyl monoacetyltitanate triisopropyl monoacetyltitanate and tetrabenzoic acid titanate, and combinations thereof, preferably at least tetra n-butyl titanate.

4. The two-component silicone-based adhesive composition according to any one of the preceding claims, wherein the amount of the titanium alkoxide adhesion promoter ranges from 0.2 to 1.0 % by weight, preferably 0.4 to 0.8 % by weight, based on the total weight of the component (B) of the silicone-based adhesive composition.

5. The two-component silicone-based adhesive composition of any one of the preceding claims, wherein the composition is stable at a temperature ranging from 200°C to 300°C.

6. The two-component silicone-based adhesive composition to any one of the preceding claims, wherein the second component (B) further comprises a hydrosilation retardant agent, preferably an organo polysiloxane, more preferably a divinyltetramethyldisiloxane, even more preferably 1,3-divinyltetramethyldisiloxane.

7. The two-component silicone-based adhesive composition to any one of the preceding claims, wherein the second component (B) further comprises one or more fillers, preferably selected from the group comprising quartz, silica, carbon black, and combinations thereof.

8. The two-component silicone-based adhesive composition according to any one of the preceding claims, wherein the -Si(OR^{a})₃ terminated polyorganosiloxane prepolymer is a -Si(OR^{a})₃ terminated poly(diorganosiloxane) prepolymer, preferably a -Si(OR^{a})₃ terminated poly(dialkyl siloxane) prepolymer.

9. The two-component silicone-based adhesive composition according to claim 8, wherein the alkyl groups of the -Si(OR^{a})₃ terminated poly(dialkyl siloxane) prepolymer are each independently selected from the group consisting of methyl and ethyl, preferably methyl.

10. The two-component silicone-based adhesive composition according to any one of the preceding claims, wherein the -Si(OR^{a})₃ terminated poly(dialkyl siloxane) is -Si(OR^{a})₃ terminated poly(dimethyl siloxane).

11. The two-component silicone-based adhesive composition according to any one of the preceding claims, wherein OR^{a} is an alkoxy or acyloxy group, the alkoxy groups preferably being selected from the group consisting of methoxy, ethoxy and propoxy, more preferably methoxy and ethoxy, most preferably methoxy.

12. The two-component silicone-based adhesive composition according to any one of the preceding claims, wherein the -Si(OR^{a})₃ group is a trialkoxy silyl group or a triacetoxy silyl group, preferably triethoxy silyl or trimethoxy silyl, more preferably trimethoxy silyl.

13. The two-component silicone-based adhesive composition according to any one of the preceding claims, wherein the vinyl and -Si(OR^{a})₃ group containing silane is a trialkoxy silane, preferably a trialkoxy silane with a C₂₋₆ hydrocarbon moiety comprising a vinyl group, more preferably vinyl or allyl trimethoxy silane.

14. Use of the two-component silicone-based adhesive composition according to any one of claims 1 to 13 for bonding two or more substrates.

## Patentansprüche

1. Zweikomponenten-Klebstoffzusammensetzung auf Silikonbasis, umfassend:
eine erste Komponente (A), umfassend:
mindestens ein vinylterminiertes Polysiloxanpolymer; und
mindestens einen hydrosilylgruppenhaltigen Vernetzer; und
eine zweite Komponente (B), umfassend:
mindestens ein -Si(OR^{a})₃-terminiertes Polyorganosiloxanpräpolymer;
einen Hydrosilylierungskatalysator;
mindestens ein vinylterminiertes Polysiloxanpolymer,
wobei OR^{a} eine hydrolysierbare Gruppe ist, wobei jedes R^{a} vorzugsweise und unabhängig Alkyl oder Acyl ist und das -Si(OR^{a})₃-terminierte Polyorganosiloxanpräpolymer durch Umsetzen eines wasserstoff terminierten Polyorganosiloxans mit einer Vinyl- und einer -Si(OR^{a})₃-Gruppe, die Silan enthält, in der Gegenwart eines Katalysators erhältlich ist, wobei das wasserstoffterminierte Polyorganosiloxan in molarem Überschuss in Bezug auf das Verhältnis von reaktiven Wasserstoffatomen zu Vinylgruppen der Vinyl- und der -Si(OR^{a})₃-Gruppe, die Silan enthält; und
mindestens ein Epoxysilan in einer Menge von 0,3 Gew.-% bis 1,2 Gew.-%, vorzugsweise 0,5 Gew.-% bis 0,9 Gew.-%, bezogen auf das Gesamtgewicht der Komponente (B);
wobei die erste Komponente (A), die zweite Komponente (B) oder beide einen Titanalkoxid-Haftvermittler umfassen.

2. Zweikomponenten-Klebstoffzusammensetzung auf Silikonbasis nach Anspruch 1, wobei das mindestens eine Epoxysilan ein Glycidyltrialkoxysilan, vorzugsweise ein Glycidyltrimethoxysilan ist.

3. Zweikomponenten-Klebstoffzusammensetzung auf Silikonbasis nach einem der vorstehenden Ansprüche, wobei der Titanalkoxid-Haftvermittler
(1) in der zweiten Komponente (B) enthalten ist; und/oder
(2) in der ersten Komponente (A) enthalten ist; und/oder
(3) eines oder mehrere von: Tetraethyltitanat, Tetraisopropyltitanat (TIPT), Tetra-n-propyltitanat, Tetra-n-butyltitanat, Tetra(2-ethylhexyl)titanat, Isopropylbutyltitanat, Tetrastearyltitanat, Diisopropoxy-bis(acetylacetonato)titan, Di-n-butoxy-bis(triethanolaminoato)titan, Tributylmonoacetyltitanat, Triisopropylmonoacetyltitanat und Tetrabenzoesäuretitanat und Kombinationen davon, vorzugsweise mindestens Tetra-n-butyltitanat einschließt.

4. Zweikomponenten-Klebstoffzusammensetzung auf Silikonbasis nach einem der vorstehenden Ansprüche, wobei die Menge des Titanalkoxid-Haftvermittlers in dem Bereich von 0,2 Gew.-% bis 1,0 Gew.-%, vorzugsweise 0,4 Gew.-% bis 0,8 Gew.-%, liegt, bezogen auf das Gesamtgewicht der Komponente (B) der Klebstoffzusammensetzung auf Silikonbasis.

5. Zweikomponenten-Klebstoffzusammensetzung auf Silikonbasis nach einem der vorstehenden Ansprüche, wobei die Zusammensetzung bei einer Temperatur in dem Bereich von 200 °C bis 300 °C stabil ist.

6. Zweikomponenten-Klebstoffzusammensetzung auf Silikonbasis nach einem der vorstehenden Ansprüche, wobei die zweite Komponente (B) ferner ein Hydrosilylierungsverzögerungsmittel, vorzugsweise ein Organopolysiloxan, bevorzugter ein Divinyltetramethyldisiloxan, weiter bevorzugt 1,3-Divinyltetramethyldisiloxan umfasst.

7. Zweikomponenten-Klebstoffzusammensetzung auf Silikonbasis nach einem der vorstehenden Ansprüche, wobei die zweite Komponente (B) ferner einen oder mehrere Füllstoffe, die vorzugsweise aus der Gruppe ausgewählt sind, umfassend Quarz, Kieselsäure, Ruß und Kombinationen davon, umfasst.

8. Zweikomponenten-Klebstoffzusammensetzung auf Silikonbasis nach einem der vorstehenden Ansprüche, wobei das -Si(OR^{a})₃-terminierte Polyorganosiloxanpräpolymer ein -Si(OR^{a})-terminiertes Poly(diorganosiloxan)-Prepolymer, vorzugsweise ein -Si(OR^{a})₃-terminiertes Poly(dialkylsiloxan)-Präpolymer ist.

9. Zweikomponenten-Klebstoffzusammensetzung auf Silikonbasis nach Anspruch 8, wobei die Alkylgruppen des -Si(OR^{a})₃-terminierten Poly(dialkylsiloxan)-Präpolymers jeweils unabhängig ausgewählt sind aus der Gruppe bestehend aus Methyl und Ethyl, vorzugsweise Methyl.

10. Zweikomponenten-Klebstoffzusammensetzung auf Silikonbasis nach einem der vorstehenden Ansprüche, wobei das Si(OR^{a})₃-terminierte Poly(dialkylsiloxan) -Si(OR^{a})₃-terminiertes Poly(dimethylsiloxan) ist.

11. Zweikomponenten-Klebstoffzusammensetzung auf Silikonbasis nach einem der vorstehenden Ansprüche, wobei OR^{a} eine Alkoxy- oder Acyloxygruppe ist, die Alkoxygruppen vorzugsweise aus der Gruppe ausgewählt sind, bestehend aus Methoxy, Ethoxy und Propoxy, bevorzugter Methoxy und Ethoxy, weiter bevorzugt Methoxy.

12. Zweikomponenten-Klebstoffzusammensetzung auf Silikonbasis nach einem der vorstehenden Ansprüche, wobei die -Si(OR^{a})₃-Gruppe eine Trialkoxysilylgruppe oder eine Triacetoxysilylgruppe, vorzugsweise Triethoxysilyl oder Trimethoxysilyl, bevorzugter Trimethoxysilyl ist.

13. Zweikomponenten-Klebstoffzusammensetzung auf Silikonbasis nach einem der vorstehenden Ansprüche, wobei die Vinyl- und die -Si(OR^{a})₃-Gruppe, die Silan enthält, ein Trialkoxysilan, vorzugsweise ein Trialkoxysilan mit einem C₂₋₆-Kohlenwasserstoffrest, umfassend eine Vinylgruppe, bevorzugter Vinyl- oder Allyltrimethoxysilan ist.

14. Verwendung einer Zweikomponenten-Klebstoffzusammensetzung auf Silikonbasis nach einem der Ansprüche 1 bis 13 zum Verkleben von zwei oder mehr Substraten.

## Revendications

1. Composition adhésive à deux composants à base de silicone comprenant :
un premier composant (A) comprenant :
au moins un polymère de polysiloxane à terminaison vinyle ; et
au moins un réticulant contenant un groupe hydrosilyle ; et
un second composant (B) comprenant :
au moins un prépolymère de polyorganosiloxane à terminaison -Si(OR^{a})₃ ;
un catalyseur d'hydrosilylation ;
au moins un polymère de polysiloxane à terminaison vinyle,
dans laquelle OR^{a} est un groupe hydrolysable, chaque R^{a} étant de préférence et indépendamment un alkyle ou un acyle, et le prépolymère de polyorganosiloxane à terminaison -Si(OR^{a})₃ peut être obtenu en faisant réagir un polyorganosiloxane à terminaison hydrogène avec un silane contenant des groupes vinyle et -Si(OR^{a})₃ en présence d'un catalyseur, dans laquelle le polyorganosiloxane à terminaison hydrogène est utilisé en excès molaire par rapport au rapport entre les atomes d'hydrogène réactifs et les groupes vinyle du silane contenant des groupes vinyle et -Si(OR^{a})₃ ; et
au moins un silane époxydique en une quantité allant de 0,3 % à 1,2 % en poids, de préférence de 0,5 % à 0,9 % en poids, par rapport au poids total du composant (B) ;
dans laquelle le premier composant (A), le second composant (B) ou les deux comprennent un promoteur d'adhésion à base d'oxyde de titane.

2. Composition adhésive bicomposante à base de silicone selon la revendication 1, dans laquelle l'au moins un époxy silane est un glycidyl trialkoxy silane, de préférence un glycidyl triméthoxy silane.

3. Composition adhésive bicomposante à base de silicone selon l'une quelconque des revendications précédentes, dans laquelle le promoteur d'adhésion à base d'alcoxyde de titane
(1) est compris dans le second composant (B) ; et/ou
(2) est compris dans le premier composant (A) ; et/ou
(3) comporte un ou plusieurs parmi du titanate de tétraéthyle, titanate de tétra-isopropyle (TIPT), titanate de tétra-n-propyle, titanate de tétra-n-butyle, titanate de tétra(2-éthylhexyle), titanate d'isopropyle-butyle, titanate de tétrastéaryle, diisopropoxy-bis(acetylacetonato) titane, di-n-butoxy-bis(triethanolaminoato)titane, tributyl monoacetyltitanate triisopropyl monoacetyltitanate et titanate d'acide tétrabenzoïque, et leurs combinaisons, de préférence au moins le titanate de tétra n-butyle.

4. Composition adhésive bicomposante à base de silicone selon l'une quelconque des revendications précédentes, dans laquelle la quantité de promoteur d'adhésion à base d'alcoxyde de titane est comprise entre 0,2 et 1,0 % en poids, de préférence entre 0,4 et 0,8 % en poids, par rapport au poids total du composant (B) de la composition adhésive à base de silicone.

5. Composition adhésive bicomposante à base de silicone selon l'une quelconque des revendications précédentes, dans laquelle la composition est stable à une température comprise entre 200 °C et 300 °C.

6. Composition adhésive bicomposante à base de silicone selon l'une quelconque des revendications précédentes, dans laquelle le second composant (B) comprend en outre un agent retardateur d'hydrosilation, de préférence un organo-polysiloxane, plus préférentiellement un divinyltétraméthyldisiloxane, encore plus préférablement un 1,3-divinyltétraméthyldisiloxane.

7. Composition adhésive bicomposante à base de silicone selon l'une quelconque des revendications précédentes, dans laquelle le second composant (B) comprend en outre une ou plusieurs charges, de préférence choisies dans le groupe comprenant le quartz, la silice, le noir de carbone et des combinaisons de ceux-ci.

8. Composition adhésive bicomposante à base de silicone selon l'une quelconque des revendications précédentes, dans laquelle le prépolymère polyorganosiloxane à terminaison -Si(OR^{a})₃ est un prépolymère poly(diorganosiloxane) à terminaison -Si(OR^{a})₃, de préférence un prépolymère poly(dialkyl siloxane) à terminaison -Si(OR^{a})₃.

9. Composition adhésive bicomposante à base de silicone selon la revendication 8, dans laquelle les groupes alkyles du prépolymère poly(dialkyl siloxane) terminé par -Si(OR^{a})₃ sont chacun indépendamment choisis dans le groupe constitué par le méthyle et l'éthyle, de préférence le méthyle.

10. Composition adhésive bicomposante à base de silicone selon l'une quelconque des revendications précédentes, dans laquelle le poly(dialkyl siloxane) à terminaison -Si(OR^{a})₃ est un poly(diméthyl siloxane) à terminaison -Si(OR^{a})₃.

11. Composition adhésive bicomposante à base de silicone selon l'une quelconque des revendications précédentes, dans laquelle OR^{a} est un groupe alcoxy ou acyloxy, les groupes alcoxy étant de préférence choisis dans le groupe constitué par le méthoxy, l'éthoxy et le propoxy, plus préférablement le méthoxy et l'éthoxy, le plus préférablement le méthoxy.

12. Composition adhésive bicomposante à base de silicone selon l'une quelconque des revendications précédentes, dans laquelle le groupe -Si(OR^{a})₃ est un groupe trialkoxy silyle ou un groupe triacétoxy silyle, de préférence triéthoxy silyle ou triméthoxy silyle, plus préférentiellement triméthoxy silyle.

13. Composition adhésive bicomposante à base de silicone selon l'une quelconque des revendications précédentes, dans laquelle le silane contenant des groupes vinyle et -Si(OR^{a})₃ est un trialkoxy silane, de préférence un trialkoxy silane avec un groupement hydrocarboné en C_{2 à 6} comprenant un groupe vinyle, plus préférablement un vinyle ou un allyl triméthoxy silane.

14. Utilisation de la composition adhésive à base de silicone à deux composants selon l'une quelconque des revendications 1 à 13 destinée à relier deux substrats ou plus.
